# EUROPÄISCHE PATENTSCHRIFT

(11) **EP 4 068 984 B1**
(45) Veröffentlichungstag und Bekanntmachung des Hinweises auf die Patenterteilung: **03.04.2024**
(21) Anmeldenummer: 20774922.7
(22) Anmeldetag: 15.09.2020
(51) Int. Cl.: A23L 2/46, A23L 3/00, A23L 3/02, B65B 55/00

(54) **ANLAGE ZUM PASTEURISIEREN VON IN VERSCHLOSSENEN BEHÄLTNISSEN ABGEFÜLLTEN LEBENSMITTELN ODER GETRÄNKEN MIT EINER PROZESSFLÜSSIGKEIT**
PLANT FOR PASTEURIZING FOODSTUFFS OR BEVERAGES FILLED INTO CLOSED CONTAINERS BY WAY OF A PROCESS LIQUID
INSTALLATION DE PASTEURISATION D'ALIMENTS OU DE BOISSONS INTRODUITS DANS DES RÉCIPIENTS FERMÉS AU MOYEN D'UN LIQUIDE DE TRAITEMENT

(30) Priorität: 05.12.2019 DE 102019133184
(43) Veröffentlichungstag der Anmeldung: 12.10.2022
(73) Patentinhaber: Krones AG, 93073 Neutraubling (DE)
(72) Erfinder: LUECKE, Jens, 93073 Neutraubling (DE); MUENZER, Jan, 93073 Neutraubling (DE)
(74) Vertreter: Grünecker Patent- und Rechtsanwälte PartG mbB
(86) Internationale Anmeldenummer: PCT/EP2020/075707
(87) Internationale Veröffentlichungsnummer: WO 2021/110296

(56) Entgegenhaltungen:
- EP-A1- 3 378 330
- WO-A1-2017/055501
- DE-A1- 19 908 035
- DE-A1-102007 003 976

## Beschreibung

Die Erfindung bezieht sich auf eine Anlage zum Pasteurisieren von in verschlossenen Behältnissen abgefüllten Lebensmitteln oder Getränken mit einer Prozessflüssigkeit gemäß Anspruch 1.

### Stand der Technik

Es sind bereits Anlagen bekannt, die eine Wärmepumpe im Zusammenhang mit Tunnelpasteuren verwenden. Hierbei sind grundsätzlich zwei Anbindungsarten der Wärmepumpe an den Pasteur bekannt.

Bei der einen Anbindungsart kann beispielsweise die Wärmepumpe direkt in den Prozesswasserkreislauf zweier Zonen integriert werden; dies ist u.a. in JP 2012166806, FR 2520984 und DE 10 2007 003 919 A1 offenbart. Meist wird die Wärmepumpe zwischen der letzten Abkühlzone und einer der anderen Zonen platziert.

Bei dieser Anbindungsart kann die Kühl-/Heizenergie der Wärmepumpe immer nur in zwei Zonen und nicht in der ganzen Maschine genutzt werden. Eine Umschaltung zwischen verschiedenen Zonen, die für die Anbindung an die Wärmepumpe genutzt werden könnten, ist konstruktiv sehr aufwendig. Deshalb ist die Wärmepumpe bei dieser Anbindungsart immer fest mit dem gleichen Zonenpaar verbunden. Wird aufgrund von bestimmten Betriebszuständen (z.B. Stop-and-Go-Betrieb) vorwiegend Heiz- bzw. Kühlenergie in den anderen Zonen benötigt, die nicht an die Wärmepumpe angeschlossen sind, ist kein Vorteil aus der Wärmepumpe zu erzielen. Zudem werden die Wärmetauscher zum Anschluss der Wärmepumpe immer mit durchströmt, es sei denn, es ist ein Bypassrohr vorhanden, so dass auch bei abgeschalteter Wärmepumpe zusätzliche Druckverluste entstehen können.

Bei der anderen Anbindungsart kann an das Leitungssystem des Prozesswassers aller Zonen direkt ein Heiß- und/oder ein Kaltwassertank als Wärme- bzw. Kältereservoir angeschlossen werden; dies ist u.a. in WO 2017/055501 und EP3378330 A1 offenbart. Der Wasserausgleich zwischen der Pasteurwanne zu den Tanks verläuft dabei im offenen System über die geodätische Höhe, also ohne Überdruck, da diese Tanks nach oben offen sind. Dies hat zur Folge, dass die Tanks entweder in den Pasteur integriert werden oder in unmittelbarer Nähe in einer festen geodätischen Höhe zum Pasteur stehen müssen. An diese Tanks ist dann ein Heiz- bzw. Kühlsystem angeschlossen. Die Wärmepumpe wird zwischen das Heiz- und das Kühlsystem geschaltet. Die Aufstellung der Tanks und die Einstellung der Wasserlevel in der Inbetriebnahmephase sind daher im Vergleich zu einem Heizungs-Kühlsystem mit einem geschlossenen, druckbehafteten System deutlich aufwendiger. In Abhängigkeit der räumlichen Gegebenheiten in der Halle können sich ständig ändernde Aufstellsituationen ergeben. Die folglich unterschiedlich langen Anschlussverrohrungen können im offenen System das gesamte Regelverhalten des Pasteurs deutlich beeinflussen.

DE 10 2007 003 976 A1 offenbart eine Pasteurisierungsvorrichtung zur thermischen Behandlung von in verschlossenen Behältern vorliegenden Flüssigkeiten mit einer Erwärmungs,- Pasteurisierungs- und Abkühlzone. Zudem ist eine Wärmepumpe vorgesehen, die mit einem Segment der Pasteurisierungszone und einem Segment der Abkühlzone derart verbunden ist, dass Wärmeenergie von Flüssigkeit des Segments der Abkühlzone mittels der Wärmepumpe in ein Segment der Pasteurisierungszone überführbar ist.

### Aufgabe

Der Erfindung liegt die Aufgabe zugrunde eine Anlage zum Pasteurisieren von in verschlossenen Behältnissen abgefüllten Lebensmitteln oder Getränken mit einer Prozessflüssigkeit zur Verfügung zu stellen, die eine Positionierung von Anlageelementen für ein Erwärmen oder Abkühlen der Prozessflüssigkeit unabhängig von der Position der restlichen Anlage ermöglicht.

### Lösung

Die Aufgabe wird gelöst durch die Anlage zum Pasteurisieren von in verschlossenen Behältnissen abgefüllten Lebensmitteln oder Getränken mit einer Prozessflüssigkeit gemäß Anspruch 1. Verschiedene Ausführungsformen sind in den Unteransprüchen offenbart.

Die Anlage zum Pasteurisieren von in verschlossenen Behältnissen, wie Flaschen, Dosen, abgefüllten Lebensmitteln oder Getränken mit einer Prozessflüssigkeit umfasst mindestens eine Anwärmzone, mindestens eine Pasteurisierungszone und mindestens eine Abkühlzone, die aufeinanderfolgend in einer Förderrichtung der Behältnisse angeordnet sind. Jeder der Zonen ist jeweils eine Berieselungsvorrichtung zum Ausbringen der Prozessflüssigkeit und jeweils ein Sammelbereich zum Aufnehmen der ausgebrachten Prozessflüssigkeit zugeordnet.

Weiter umfasst die Anlage Fördermittel, wie ein Förderband, eine Förderkette, zum Fördern der Behältnisse in der Förderrichtung durch die mindestens eine Anwärmzone, die mindestens eine Pasteurisierungszone und die mindestens eine Abkühlzone.

Zudem ist ein erster Wärmetauscher (WT) vorgesehen, der Wärme von einer Wärmequelle, wie von einer Dampf- oder Heißwasserquelle, der Prozessflüssigkeit aus einem Sammelbereich der mindestens einen Pasteurisierungszone zuführt und dazu mit dem einen Sammelbereich der mindestens einen Pasteurisierungszone und mit Zuläufen zu den Berieselungsvorrichtungen der mindestens einen Anwärmzone über ein druckgeschlossenes Anwärmleitungssystem leitungsverbunden ist.

Weiter ist ein zweiter WT vorgesehen, der mit einer Kühlanlage, wie einem Kühlturm, gekoppelt ist, um die Prozessflüssigkeit aus dem Sammelbereich der mindestens einen Abkühlzone zu kühlen und dazu mit dem einen Sammelbereich der mindestens einen Abkühlzone und Zuläufen zu den Berieselungsvorrichtungen der mindestens einen Abkühlzone über ein druckgeschlossenes Abkühlleitungssystem leitungsverbunden ist.

Weiter umfasst die Anlage eine Wärmepumpe umfassend einen Kondensator und einen Verdampfer, wobei der Prozessflüssigkeit in dem Anwärmleitungssystem mittels des Kondensators zusätzlich Wärme zuführbar ist und wobei die Prozessflüssigkeit in dem Abkühlleitungssystem mittels des Verdampfers zusätzlich kühlbar ist.

Unter dem Ausdruck "leitungsverbunden" kann verstanden werden, dass zwischen zwei oder mehreren leitungsverbundenen Elementen, z.B. Sammelbereich und Wärmetauscher, eine oder mehrere Rohrleitungen vorgesehen sind, durch die beispielsweise ein Medium fließen kann, das beispielsweise von dem Sammelbereich zu dem Wärmetauscher gelangen soll.

Ein Tunnelpasteur oder ein anderer Pasteurtyp können die Anwärm-, Pasteurisierungs- und Abkühlzonen, die Berieselungsvorrichtungen und Sammelbereiche umfassen. Die Prozessflüssigkeit kann Frischwasser oder Frischwasser mit Zusätzen sein oder umfassen.

Die Anwärm-, Pasteurisierungs- und Abkühlzonen sind im Allgemeinen auf einem anderen Höhenniveau angeordnet wie die Wärmepumpe und die Wärmetauscher der Anlage.

Das Anwärm- bzw. Abkühlleitungssystem bezieht sich auf eine oder mehrere Rohrleitungen, die derart ausgelegt sind, dass flüssige Medien, wie beispielsweise die Prozessflüssigkeit, durch sie fließen können. Das Anwärm- bzw. Abkühlleitungssystem sind jeweils druckgeschlossen ausgebildet, was bedeutet, dass in den jeweiligen Leitungssystemen ein Überdruck bezüglich des Umgebungsdrucks ausgebildet sein kann. Durch die druckgeschlossene Ausbildung ist es nicht erforderlich, die Anwärm-, Pasteurisierungs- und Abkühlzonen und die Wärmepumpe und die Wärmetauscher der Anlage unter Beachtung der geodätischen Höhe anzuordnen. Beispielsweise können die Wärmepumpe und die Wärmetauscher über den Anwärm-, Pasteurisierungs- und Abkühlzonen angeordnet werden, beispielsweise oberhalb des Tunnelpasteurs und/oder auch in einem anderen Stockwerk; die entsprechende Höhe kann hierbei durch den Überdruck in dem Anwärm- bzw. Abkühlleitungssystem vorgegeben werden.

In Ausführungsformen der Anlage (a) kann in der Anlage kein Puffertank oder kein sonstiger Tank vorgesehen sein, (b) können in der Anlage kein Puffertank oder kein sonstiger Tank, die Umgebungsdruck aufweisen, vorgesehen sein, aber es können Tanks mit Überdruck vorgesehen sein, (c) können in dem Anwärm- bzw. Abkühlleitungssystem kein Puffertank oder kein sonstiger Tank, die Umgebungsdruck aufweisen, vorgesehen sein.

Der erste WT kann weiter mit Zuläufen zu den Berieselungsvorrichtung der mindestens einen Pasteurisierungszone über das Anwärmleitungssystem leitungsverbunden sein, wobei optional der erste WT zudem weiter mit Zuläufen zu den Berieselungsvorrichtung der mindestens einen Anwärmzone über das Anwärmleitungssystem leitungsverbunden sein kann. Der zweite WT kann weiter mit Zuläufen zu den Berieselungsvorrichtungen der mindestens einen Abkühlzone über das Abkühlleitungssystem leitungsverbunden sein, wobei optional der zweite WT zudem weiter mit Zuläufen zu den Berieselungsvorrichtungen der mindestens einen Pasteurisierungszone über das Abkühlleitungssystem leitungsverbunden sein kann.

Durch die Leitungsverbindung zu unterschiedlichen Zuläufen von Berieselungsvorrichtungen kann eine größere Variabilität beim Verteilen der erwärmten oder der abgekühlten Prozessflüssigkeit erreicht werden.

In dem Anwärmleitungssystem kann gegenüber einem Umgebungsdruck ein erster Überdruck in einem Bereich von 0,5·10⁵ Pa bis 2,5·10⁵ Pa vorgesehen sein und/oder in dem Abkühlleitungssystem kann gegenüber dem Umgebungsdruck ein zweiter Überdruck in einem Bereich von 0,5·10⁵ Pa bis 2,5·10⁵ Pa vorgesehen ist, wobei der erste und der zweite Überdruck gleich oder verschieden groß sein können.

Durch das Vorsehen eines Überdrucks in dem Anwärm- bzw. dem Abkühlleitungssystem wird eine Positionierung von Anlageelementen für ein Erwärmen oder Abkühlen der Prozessflüssigkeit unabhängig von der Position der restlichen Anlage ermöglicht, da nicht auf die geodätische Höhe, wie bei einem offenen Leitungssystem, geachtet werden muss.

Von dem Sammelbereich der mindestens einen Abkühlzone kann die Prozessflüssigkeit mittels einer ersten Pumpe über das Abkühlleitungssystem einem ersten Eingang des zweiten WT zuführbar sein.

Eine Menge von zugeführter Wärme der Wärmequelle kann mittels einer Dosiervorrichtung steuerbar sein. Beispielsweise kann die Menge an eingebrachtem Dampf oder Heißwasser gesteuert werden.

Die Prozessflüssigkeit aus dem Sammelbereich der mindestens einen Pasteurisierungszone kann einem zweiten Eingang des ersten WT mittels einer zweiten Pumpe über das Anwärmleitungssystem zuführbar sein.

In einer Ausführungsform können in dem Anwärmleitungssystem ein erster Bypass zu dem Kondensator und in dem Abkühlleitungssystem ein zweiter Bypass zu dem Verdampfer vorgesehen sein, wobei optional der erste Bypass vor dem ersten WT vorgesehen sein kann, wobei optional der zweite Bypass vor dem zweiten WT vorgesehen sein kann.

So ist es möglich, der Prozessflüssigkeit weitere Wärme zuzuführen oder die Prozessflüssigkeit weiter abzukühlen.

Der erste Bypass kann vom Anwärmleitungssystem durch eine erste Dosiervorrichtung zu einem ersten Eingang des Kondensators, durch den Kondensator hindurch und von einem ersten Ausgang des Kondensators zurück zu dem Anwärmleitungssystem führen, und der zweite Bypass kann vom Abkühlleitungssystem durch eine zweite Dosiervorrichtung zu einem ersten Eingang des Verdampfers, durch den Verdampfer hindurch und von einem ersten Ausgang des Verdampfers zurück zu dem Abkühlleitungssystem führen.

In dem ersten Bypass kann weiter ein Wärmetank und in dem zweiten Bypass kann weiter ein Kältetank vorgesehen sein. Die Tanks ermöglichen ein Zwischenspeichern der erwärmten bzw. der abgekühlten Prozessflüssigkeit, so dass auch bei einem nicht-konstanten Bedarf eine passende Versorgung der Berieselungsvorrichtungen der verschiedenen Zonen mit der entsprechenden Prozessflüssigkeit möglich ist.

Nach der ersten Dosiervorrichtung kann ein erster Eingang zu dem Wärmetank vorgesehen sein, und ein erster Ausgang des Wärmetanks kann durch eine dritte Pumpe zu dem ersten Eingang des Kondensators führen, wobei der erste Ausgang des Kondensators zu einem zweiten Eingang des Wärmetanks und ein zweiter Ausgang des Wärmetanks durch eine vierte Pumpe und eine dritte Dosiervorrichtung zurück zu dem Anwärmleitungssystem führen kann. Nach der zweiten Dosiervorrichtung kann ein erster Eingang zu dem Kältetank vorgesehen sein, und ein erster Ausgang des Kältetanks kann durch eine Pumpe zu dem ersten Eingang des Verdampfers führen, wobei der erste Ausgang des Verdampfers zu einem zweiten Eingang des Kältetanks und ein zweiter Ausgang des Kältetanks durch eine sechste Pumpe und eine vierte Dosiervorrichtung zurück zu dem Abkühlleitungssystem führen kann.

Zwischen der ersten Dosiervorrichtung und dem ersten Eingang des Wärmetanks kann ein erstes Federventil und zwischen der vierten Pumpe und der dritten Dosiervorrichtung kann ein zweites Federventil vorgesehen sein.

Zwischen der zweiten Dosiervorrichtung und dem ersten Eingang des Kältetanks kann ein drittes Federventil und zwischen der sechsten Pumpe und der vierten Dosiervorrichtung kann ein viertes Federventil vorgesehen sein.

Somit ist ein Abkoppeln der Wärmepumpe möglich, so dass keine zusätzlichen Druckverluste oder andere Nachteile gegenüber einer Anlage ohne Wärmepumpe entstehen, wenn die Wärmepumpe gerade nicht benötigt wird.

In einer anderen Ausführungsform, ohne Bypass, kann die Anlage einen dritten WT umfassen, durch den das Anwärmleitungssystem zumindest teilweise verlaufen kann, wobei der dritte WT der Prozessflüssigkeit in dem Anwärmleitungssystem Wärme von einem Wärmetank der Anlage zuführen und dazu mit dem Wärmetank und dem Kondensator leitungsverbunden sein kann, und einen vierten WT umfassen, durch den das Abkühlleitungssystem zumindest teilweise verlaufen kann, wobei der vierte WT mit einem Kältetank der Anlage und dem Verdampfer leitungsverbunden sein und die Prozessflüssigkeit in dem Abkühlleitungssystem kühlen kann.

Der dritte WT kann vor dem ersten WT und der vierte WT kann vor dem zweiten WT vorgesehen sein.

Eine Leitung kann nach einem ersten Ausgang des dritten WT zu einem ersten Eingang des Wärmetanks, von einem ersten Ausgang des Wärmetanks durch eine dritte Pumpe zu einem ersten Eingang des Kondensators, von einem ersten Ausgang des Kondensators zu einem zweiten Eingang des Wärmetanks, von einem zweiten Ausgang des Wärmetanks durch eine vierte Pumpe zu einem ersten Eingang des dritten WT führen. Eine weitere Leitung kann nach einem ersten Ausgang des vierten WT zu einem ersten Eingang des Kältetanks, von einem ersten Ausgang des Kältetanks durch eine fünfte Pumpe zu einem ersten Eingang des Verdampfers, von einem ersten Ausgang des Verdampfers zu einem zweiten Eingang des Kältetanks, von einem zweiten Ausgang des Kältetanks durch eine sechste Pumpe zu einem ersten Eingang des vierten WT führen.

Es bestehen somit jeweils getrennte Kreisläufe: einer für die Prozessflüssigkeit, die den ersten WT und den dritten WT durchfließt, und einer für Flüssigkeit, die den Wärmetank, den dritten WT und den Kondensator durchfließt, sowie einer für die Prozessflüssigkeit, die den zweiten WT und den vierten WT durchfließt, und einer für die Flüssigkeit, die den Kältetank, den Verdampfer und den vierten WT durchfließt.

Alternativ kann eine Leitung nach einem ersten Ausgang des dritten WT zu einem ersten Eingang des Wärmetanks, von einem ersten Ausgang des Wärmetanks durch eine dritte Pumpe zu einem ersten Eingang des Kondensators, von einem ersten Ausgang des Kondensators zu einem ersten Eingang des dritten WT führen, wobei zudem eine Bypassleitung um den dritten WT vorgesehen sein kann, die von vor dem ersten Eingang des dritten WT hinter den ersten Ausgang des dritten WT führen kann. Weiter kann eine weitere Leitung nach einem ersten Ausgang des vierten WT zu einem ersten Eingang des Kältetanks, von einem ersten Ausgang des Kältetanks durch eine fünfte Pumpe zu einem ersten Eingang des Verdampfers, von einem ersten Ausgang des Verdampfers zu einem ersten Eingang des vierten WT führen.

Dabei können zwei Pumpen eingespart werden.
- Figur 1: eine erste Ausführungsform einer Anlage zum Pasteurisieren,
- Figur 2: eine zweite Ausführungsform einer Anlage zum Pasteurisieren,
- Figur 3: eine dritte Ausführungsform einer Anlage zum Pasteurisieren und
- Figur 4: eine vierte Ausführungsform einer Anlage zum Pasteurisieren.

Die im Folgenden beschriebenen Ausführungsformen der Anlage zum Pasteurisieren umfassen eine gegebene Anzahl von Anwärm-, Pasteurisierungs- und Abkühlzonen, es sind jedoch auch Ausführungsformen mit mindestens einer Anwärmzone, mindestens einer Pasteurisierungszone und mindestens einer Abkühlzone vorgesehen. Auch können andere Sammelbereiche und Berieselungsvorrichtungen als beschrieben und/oder in den Figuren dargestellt miteinander leitungsverbunden sein, wobei im Allgemeinen auf die erforderliche Temperatur der Prozessflüssigkeit geachtet werden kann.

Die bezüglich der Figuren oder weiter oben erwähnten Leitungssysteme (Anwärm- bzw. Abkühlleitungssystem), Leitungen und Bypässe beziehen sich auf eine oder mehrere Rohrleitungen, die derart ausgelegt sind, dass flüssige Medien, wie beispielsweise Prozessflüssigkeit, durch sie fließen können.

Die Lagebezeichnungen "vor" oder "nach" einem Element der Anlage beziehen sich auf eine Fließrichtung eines flüssigen Mediums, wie beispielsweise der Prozessflüssigkeit, in den Leitungssystemen, Leitungen oder Bypässen.

In den unterschiedlichen beschriebenen Ausführungsformen sind gleiche Teile mit gleichen Bezugszeichen versehen.

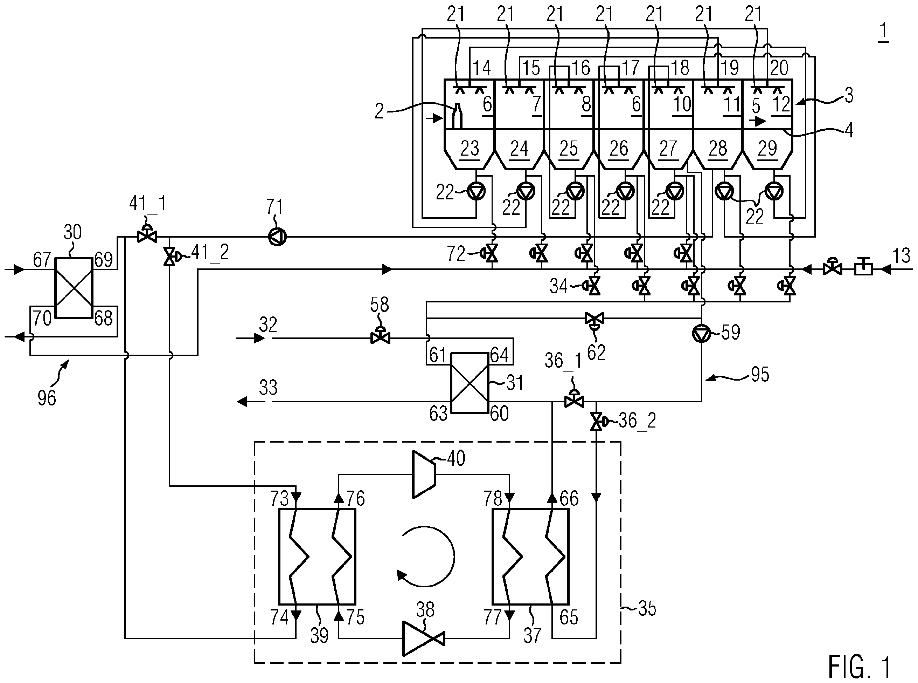

In der Figur 1 ist ein erstes Ausführungsbeispiel einer Anlage 1 zum Pasteurisieren von in verschlossenen Behältnissen 2 abgefüllten Lebensmitteln oder Getränken schematisch dargestellt. Die Anlage 1 umfasst unter anderem einen Tunnelpasteur 3, durch den die Behältnisse 2 mittels eines Fördermittels 4, beispielsweise eines Förderbands, in einer Förderrichtung 5 durch mehrere aufeinanderfolgende Zonen 6, 7, 8, 9, 10, 11, 12 transportiert werden. Bei dem in der Figur 1 dargestellten ersten Ausführungsbeispiel sind in der Förderrichtung 5 zunächst zwei Anwärmzonen 6, 7, dann drei Pasteurisierungszonen 8, 9, 10 und schließlich zwei Abkühlzonen 11, 12 vorgesehen. Anstatt des Tunnelpasteurs kann auch ein anderer Pasteurtyp vorgesehen sein, der aufeinanderfolgende Anwärm-, Pasteurisierungs- und Abkühlzonen umfasst, sowie zugeordnete Berieselungsvorrichtungen und Sammelbereiche.

Zur Pasteurisierung der Lebensmittel bzw. den Getränken kann vorgesehen sein, die Behältnisse 2 mit einer Prozessflüssigkeit 13 zu beaufschlagen. Die Prozessflüssigkeit kann Frischwasser oder Frischwasser mit Zusätzen sein. Hierzu ist in jeder Zone 6 - 12 eine Berieselungsvorrichtung 14, 15, 16, 17, 18, 19, 20 angeordnet, mit denen die Prozessflüssigkeit 13 auf die verschlossenen Behältnisse 2 aufgebracht, z.B. aufgesprüht oder berieselt, wird. Die Berieselungsvorrichtungen 14 - 20 können beispielsweise durch mehrere Sprühdüsen 21 gebildet sein, die in jeder Zone 6 - 12, wie dargestellt, in einem oberen Bereich angeordnet sind, und/oder in seitlichen Bereichen angeordnet sein können. In die jeweilige Zone 6 - 12 kann die Prozessflüssigkeit 13 über die jeweilige Berieselungsvorrichtung 14 - 20 mit jeweils unterschiedlicher und/oder für jede Zone 6 - 12 eingestellter Temperatur eingeleitet werden. Die Prozessflüssigkeit 13 kann den Berieselungsvorrichtungen 14 - 20 der Zonen 6 - 12 hierbei jeweils über eine Pumpe 22, beispielsweise eine Umwälzpumpe, zugeführt werden.

Nach Durchrieseln einer jeweiligen Zone 6 - 12 kann die Prozessflüssigkeit 13 in einem Sammelbereich 23, 24, 25, 26, 27, 28, 29, der jeweiligen Zone 6 - 12 zugeordnet ist, aufgefangen und zur weiteren Verwendung aus dem Sammelbereich 23 - 29 abgeführt werden. Die Sammelbereiche 23 - 29 sind hierbei unterhalb der jeweiligen Zonen 6 - 112 angeordnet. Zur weiteren Verwendung der Prozessflüssigkeit sind die jeweiligen Ansaugseiten der jeweiligen Pumpe 22 über Leitungen mit den entsprechenden Sammelbereichen 23 - 29 leitungsverbunden, um zumindest Teilmengen der Prozessflüssigkeit 13 aus den entsprechenden Sammelbereichen 23 - 29 wieder einer der zugeordneten, d.h. leitungsverbundenen Zonen 6 - 12 zuzuführen. Wie in der Figur 1 dargestellt, kann es hierbei zweckmäßig sein, wenn der Sammelbereich 23 der ersten Anwärmzone 6 eingangsseitig mit der Pumpe 22 leitungsverbunden ist, und die Pumpe 22 ausgangsseitig mit der Berieselungsvorrichtung 20 der zweiten Abkühlzone 12 leitungsverbunden ist. Dies kann zweckmäßig sein, da sich die Prozessflüssigkeit 13 in der ersten Anwärmzone 6 durch Wärmeaufnahme der Behältnisse 2 bzw. Lebensmittel/Getränke in den Behältnissen 2 abkühlt, und nach Durchrieseln der ersten Anwärmzone 6 das Prozesswasser 13, das sich im Sammelbereich 23 ansammelt, eine zum Abkühlen der Behältnisse 2 in der zweiten Abkühlzone 12 geeignete Temperatur aufweisen kann.

Da sich in der zweiten Abkühlzone 12 die durch die Berieselungsvorrichtung 20 ausgebrachte Prozessflüssigkeit 13 durch Wärmeabgabe der Behältnisse 2 bzw. Lebensmittel/Getränke erwärmt und nach Durchrieseln der zweiten Abkühlzone 12 das Prozesswasser 13, das sich im Sammelbereich 29 ansammelt, eine zum Erwärmen der Behältnisse 2 in der ersten Anwärmzone 6 geeignete Temperatur aufweisen kann, ist es zweckmäßig, die Prozessflüssigkeit 13 aus dem Sammelbereich 29 der zweiten Abkühlzone 12 der Berieselungsvorrichtung 14 der ersten Anwärmzone 6 zuzuführen, wie dies auch in der Figur 1 schematisch dargestellt ist.

Wie in der Figur 1 dargestellt, können die den Pasteurisierungszonen 8 - 10 zugeordneten Pumpen 22 weiter zur zumindest teilweisen Rückförderung der Prozessflüssigkeit 13 aus dem Sammelraum 25 zu der Berieselungsvorrichtung 16, aus dem Sammelraum 26 zu der Berieselungsvorrichtung 17 und aus dem Sammelraum 27 zu der Berieselungsvorrichtung 18 vorgesehen sein. Somit kann zumindest eine Teilmenge der Prozessflüssigkeit 13 im Kreis um die Pasteurisierungszonen 8 - 10 geführt werden.

In der Anlage 1 ist für ein Erwärmen der Prozessflüssigkeit 13 zudem ein erster Wärmetauscher (WT) 31 vorgesehen, in den Dampf 32 in einen ersten Eingang 64 eingebracht und über einen ersten Ausgang 63 Kondensat 33 ausgebracht wird, nachdem der Dampf 32 im Gegenstrom zur Prozessflüssigkeit 13 geflossen ist, die aus dem Sammelbereich 27 der letzten Pasteurisierungszone 10 stammt. Die Menge des eingebrachten Dampfs 32 ist mittels einer Dosiervorrichtung 58 steuerbar. Die Prozessflüssigkeit 13 aus dem Sammelbereich 27 wird einem zweiten Eingang 60 des ersten WT 31 mittels einer Pumpe 59 und durch eine Dosiervorrichtung 36_1 über ein druckgeschlossenes Anwärmleitungssystem 95 zugeführt und verlässt, nach der Erwärmung durch den im Gegenlauf transportierten Dampf 32, den ersten WT 31 über dessen zweiten Ausgang 61 und gelangt wieder in das Anwärmleitungssystem 95. Die in dem ersten WT 31 erhitzte Prozessflüssigkeit 13 kann bei Bedarf mittels Dosiervorrichtungen 34 den Zonen 6 - 10 über die den Zonen 6 - 10 zugeordneten Berieselungsvorrichtungen 14 -18 zugeführt werden. Zusätzlich oder alternativ kann die erhitzte Prozessflüssigkeit 13 oder ein Teil davon auch im Kreis durch den ersten WT 31 geführt werden, wobei die Durchflussmenge mittels einer Dosiervorrichtung 62 in dem Anwärmleitungssystem 95 steuerbar ist. Das Anwärmleitungssystem 95 ist als druckgeschlossenes System ausgebildet und wird mit einem Überdruck gegenüber dem Umgebungsdruck betrieben, beispielsweise mit einem Überdruck von 2·10⁵ Pa.

Des Weiteren ist in der Anlage 1 vorgesehen, dass wenigstens Teilmengen der in dem Sammelbereich 28 der ersten Abkühlzone 11 enthaltenen Prozessflüssigkeit 13 anstatt wieder zu der Berieselungsvorrichtung 15 der zweiten Anwärmzone 7 zurückgepumpt zu werden, einem zweiten WT 30 zugeführt werden. Der zweite WT 30 kann mit einer Kühlanlage, wie einem Kühlturm, gekoppelt sein, um die Prozessflüssigkeit 13 aus dem Sammelbereich 28 zu kühlen und ist dazu mit dem einen Sammelbereich 28 der ersten Abkühlzone 11 und Zuläufen zu den Berieselungsvorrichtungen 19, 20 der ersten 11 und zweiten Abkühlzone 12 über ein druckgeschlossenes Abkühlleitungssystem 96 leitungsverbunden. Von dem Sammelbereich 28 wird die Prozessflüssigkeit 13 mittels einer ersten Pumpe 71 und einer Dosiervorrichtung 41_1 über das Abkühlleitungssystem 96 einem ersten Eingang 69 des zweiten WT 30 zugeführt und verlässt den zweiten WT 30 nach dem Abkühlen über einen ersten Ausgang 70. Für das Abkühlen der Prozessflüssigkeit 13 in dem zweiten WT 30 wird ein Kühlmittel der Kühlanlage in einen zweiten Eingang 67 des zweiten WT 30 eingebracht, fließt im Gegenlauf zu der Prozessflüssigkeit 13 und nimmt dabei Wärme davon auf. Das erwärmte Kühlmittel verlässt den zweiten WT 30 über einen zweiten Ausgang 68. Die im zweiten WT 30 abgekühlte Prozessflüssigkeit 13 kann dann über Dosiervorrichtungen 72 den Berieselungsvorrichtungen 16, 17, 18, 19, 20 wieder zugeführt werden. Das Abkühlleitungssystem 96 ist als druckgeschlossenes System ausgebildet und wird mit einem Überdruck gegenüber dem Umgebungsdruck betrieben, beispielsweise mit einem Überdruck von 2·10⁵ Pa.

Des Weiteren ist in dem Anwärmleitungssystem 95 ein erster Bypass zu einem Kondensator 37 einer Wärmepumpe 35 vorgesehen. Der erste Bypass führt durch eine erste Dosiervorrichtung 36_2 zu einem ersten Eingang 65 des Kondensators 37, durch den Kondensator 37 hindurch und von einem ersten Ausgang 66 des Kondensators 37 zurück zu dem Anwärmleitungssystem 95. Der erste Bypass ist nach der zweiten Pumpe 59 und vor dem zweiten Eingang 60 des ersten WT 31 angeordnet ist. Die Durchflussmenge von Prozessflüssigkeit 13 durch den ersten Bypass ist mittels der Dosiervorrichtung 36_2 steuerbar; dies ist sinnvoll, da die Wärmepumpe 35 nur eine begrenzte Heizleistung aufweist, auch wenn mehr Prozessflüssigkeit 13 durch sie hindurch geleitet werden würde.

Die Prozessflüssigkeit 13 wird durch einen ersten Eingang 65 in den Kondensator 37 eingebracht und kann dort Wärme aufnehmen, die von einer Übertragungsflüssigkeit abgegeben wird, die im Gegenstrom durch den Kondensator 37 fließt. Die Übertragungsflüssigkeit durchfließt hierbei den Kondensator 37, eine Drossel 38, einen Verdampfer 39 und einen Verdichter 40 der Wärmepumpe 35. In den Kondensator 37 wird die Übertragungsflüssigkeit durch einen zweiten Eingang 78 eingebracht und verlässt nach Wärmeabgabe an die im Gegenstrom fließende Prozessflüssigkeit 13 den Kondensator 37 über einen zweiten Ausgang 77. Die erwärmte Prozessflüssigkeit 13 verlässt den Kondensator 37 über den ersten Ausgang 66 und wird über den ersten Bypass zurückgeleitet, so dass die im Kondensator 37 erwärmte Prozessflüssigkeit 13 noch durch den ersten WT 31 geleitet und dort weiter erwärmt werden kann.

In dem Abkühlleitungssystem 96 ist ein zweiter Bypass zu dem Verdampfer 39 vorgesehen, wobei der zweite Bypass nach der ersten Pumpe 71 und vor dem ersten Eingang 69 des zweiten WT 30 vorgesehen ist. Die Prozessflüssigkeit 13 wird über eine zweite Dosiervorrichtung 41_2 zu einem ersten Eingang 73 des Verdampfers 39 geleitet, darin abgekühlt, verlässt den Verdampfer 39 über einen ersten Ausgang 74 und wird dann über den Bypass zurückgeleitet, so dass die im Verdampfer 39 abgekühlte Prozessflüssigkeit 13 noch durch den zweiten WT 30 geleitet und dort weiter abgekühlt werden kann. Das Abkühlen der Prozessflüssigkeit 13 in dem Verdampfer 39 erfolgt durch die Übertragungsflüssigkeit, die in der Wärmepumpe 35 umfließt und über einen zweiten Eingang 75 in den Verdampfer 39 eingebracht wird, dort im Gegenstrom zu der Prozessflüssigkeit 13 fließt und den Verdampfer 39 über einen zweiten Ausgang 76 wieder verlässt, nachdem sie Wärme der Prozessflüssigkeit 13 aufgenommen hat.

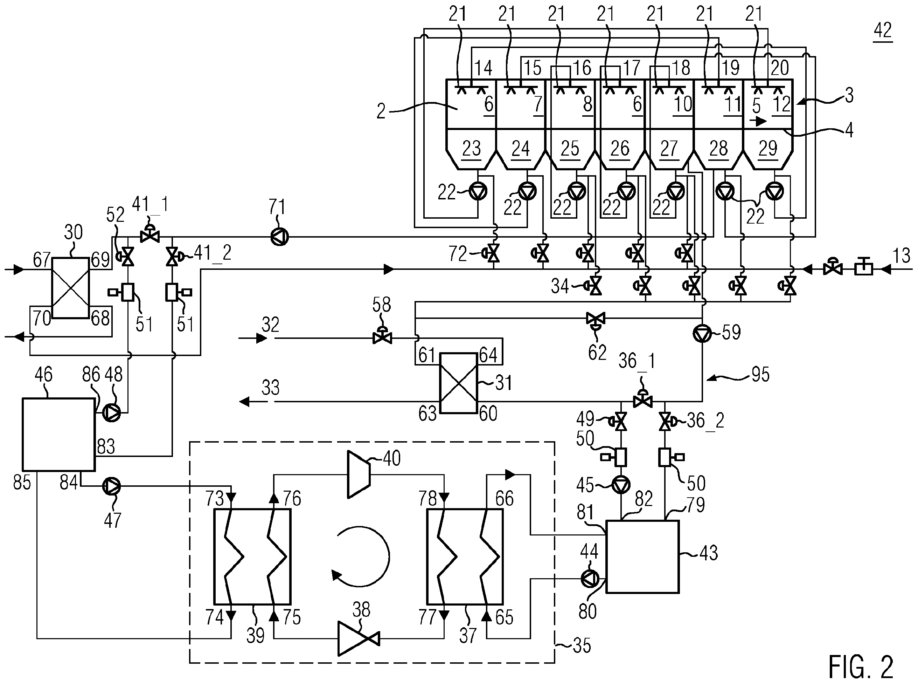

Die Figur 2 zeigt eine zweite Ausführungsform einer Anlage 42 zum Pasteurisieren von in verschlossenen Behältnissen 2 abgefüllten Lebensmitteln bzw. Getränken schematisch dargestellt. Die bereits bezüglich der Figur 1 beschriebenen Elemente werden hier nicht noch einmal erläutert.

In dem ersten Bypass ist vor dem Kondensator 37 ein Wärmetank 43 vorgesehen. Über die erste Dosiervorrichtung 36_2 kann Prozessflüssigkeit 13 in einen ersten Eingang 79 des Wärmetanks 43 eingebracht werden. Aus dem Wärmetank 43 kann aus einem ersten Ausgang 80 mittels einer dritten Pumpe 44 Prozessflüssigkeit 13 durch den Kondensator 37 geleitet und dort erwärmt werden, wie bereits bezüglich der Figur 1 beschrieben. Diese erwärmte Prozessflüssigkeit 13 wird durch einen zweiten Eingang 81 in den Wärmetank 43 zurückgeführt. Mittels einer vierten Pumpe 45 kann die Prozessflüssigkeit 13 durch einen zweiten Ausgang 82 aus dem Wärmetank 43 wieder zu dem Anwärmleitungssystem 95 und somit zu dem ersten WT 31 zurück gepumpt werden; eine dritte Dosiervorrichtung 49 ist nach der vierten Pumpe 45 in dem ersten Bypass vorgesehen. In dem ersten WT 31 kann anstatt Dampf 32 auch Heißwasser verwendet werden.

Optional können vor dem ersten Eingang 79 des Wärmetanks 43 und nach der vierten Pumpe 45 in dem ersten Bypass entsprechend erste und zweite Federventile 50 vorgesehen sein, die geschlossen werden können, um die Wärmepumpe 35 abkoppeln zu können.

In dem zweiten Bypass ist vor dem Verdampfer 39 ein Kältetank 46 vorgesehen. Über die zweite Dosiervorrichtung 41_2 kann Prozessflüssigkeit 13 in einen ersten Eingang 83 des Kältetanks 46 eingebracht werden. Aus dem Kältetank 46 kann aus einen ersten Ausgang 84 mittels einer fünften Pumpe 47 Prozessflüssigkeit 13 durch den Verdampfer 39 geleitet und dort abgekühlt werden, wie bereits bezüglich der Figur 1 beschrieben. Diese abgekühlte Prozessflüssigkeit 13 wird durch einen zweiten Eingang 85 in den Kältetank 46 zurückgeführt. Mittels einer sechsten Pumpe 48 kann die Prozessflüssigkeit 13 durch einen zweiten Ausgang 86 aus dem Kältetank 46 wieder in das Abkühlleitungssystem 96 vor dem zweiten WT 30 zurückgepumpt werden; eine vierte Dosiervorrichtung 52 ist nach der sechsten Pumpe 48 in dem zweiten Bypass vorgesehen.

Optional können vor dem ersten Eingang 83 des Kältetanks 46 und nach der sechsten Pumpe 48 in dem zweiten Bypass entsprechend dritte und vierte Federventile 51 vorgesehen sein, die geschlossen werden können, um die Wärmepumpe 35 ausschließen zu können.

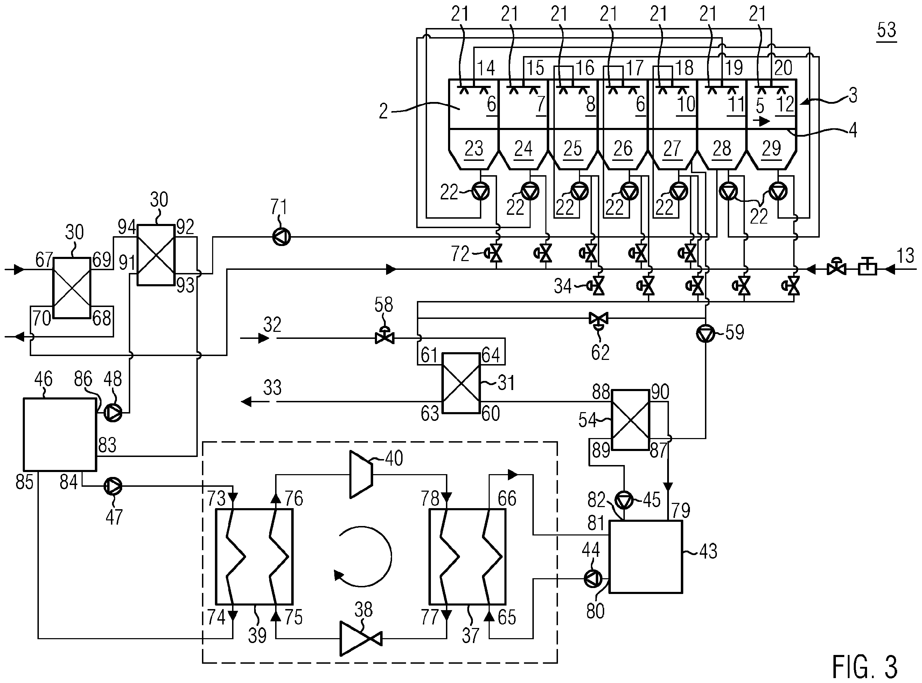

In der Figur 3 ist eine dritte Ausführungsform einer Anlage 53 zum Pasteurisieren von in verschlossenen Behältnissen 2 abgefüllten Lebensmitteln oder Getränken schematisch dargestellt. Die bereits bezüglich der Figuren 1 und 2 beschriebenen Elemente werden hier nicht noch einmal erläutert.

In der dritten Ausführungsform ist ein dritter WT 54 im Anwärmleitungssystem 95 vor dem ersten WT 31 vorgesehen, so dass die Prozessflüssigkeit 13 durch den dritten WT 54 und den ersten WT 31 umläuft. Im Gegenstrom zu der Prozessflüssigkeit 13 fließt in dem dritten WT 54 Flüssigkeit aus dem Wärmetank 43 um, die mittels der vierten Pumpe 45 aus dem zweiten Ausgang 82 des Wärmetanks 43 gepumpt und nach Durchlaufen des dritten WT 54 - d.h., die Flüssigkeit wird über einen ersten Eingang 89 in den dritten WT 54 eingebracht und über einen ersten Ausgang 90 ausgebracht - über den ersten Eingang 79 in den Wärmetank 43 zurückgeleitet wird. Die Prozessflüssigkeit 13 wird in den dritten WT 54 über einen zweiten Eingang 87 ein- und über einen zweiten Ausgang 88 ausgebracht und gelangt dann zum zweiten Eingang 60 des ersten WT 31.

Es bestehen somit getrennte Kreisläufe: einer für die Prozessflüssigkeit 13, die den ersten WT 31 und den dritten WT 54 durchfließt, und einer für die Flüssigkeit, die den Wärmetank 43, den dritten WT 54 und den Kondensator 37 durchfließt. Die Flüssigkeit aus dem Wärmetank 43 wird, wie zuvor in der zweiten Ausführungsform, mittels der dritten Pumpe 44 durch den Kondensator 37 der Wärmepumpe 35 gepumpt und gelangt zurück in den Wärmetank 43.

Ein vierter WT 55 ist im Abkühlleitungssystem 96 vor dem zweiten WT 30 vorgesehen, so dass die Prozessflüssigkeit 13 durch den vierten WT 55 und den ersten WT 30 umläuft. Im Gegenstrom zu der Prozessflüssigkeit 13 fließt in dem vierten WT 55 Flüssigkeit aus dem Kältetank 46 um, die mittels der sechsten Pumpe 48 aus dem zweiten Ausgang 86 des Kältetanks 46 gepumpt und nach Durchlaufen des vierten WT 55 - d.h., die Flüssigkeit wird über einen ersten Eingang 91 in den vierten WT 55 eingebracht und über einen ersten Ausgang 92 ausgebracht - über den ersten Eingang 83 in den Kältetank 46 zurückgeleitet wird. Die Prozessflüssigkeit 13 wird in den vierten WT 55 über einen zweiten Eingang 93 ein- und über einen zweiten Ausgang 94 ausgebracht und gelangt dann zum zweiten Eingang 69 des zweiten WT 30, wo sie weiter abgekühlt werden kann.

Es bestehen somit getrennte Kreisläufe: einer für die Prozessflüssigkeit 13, die den zweiten WT 30 und den vierten WT 55 durchfließt, und einer für die Flüssigkeit, die den Kältetank 46, den Verdampfer 39 und den vierten WT 55 durchfließt. Die Flüssigkeit aus dem Kältetank 46 wird wie zuvor in der zweiten Ausführungsform mittels der fünften Pumpe 47 durch den Verdampfer 39 der Wärmepumpe 35 gepumpt und gelangt danach zurück in den Kältetank 46.

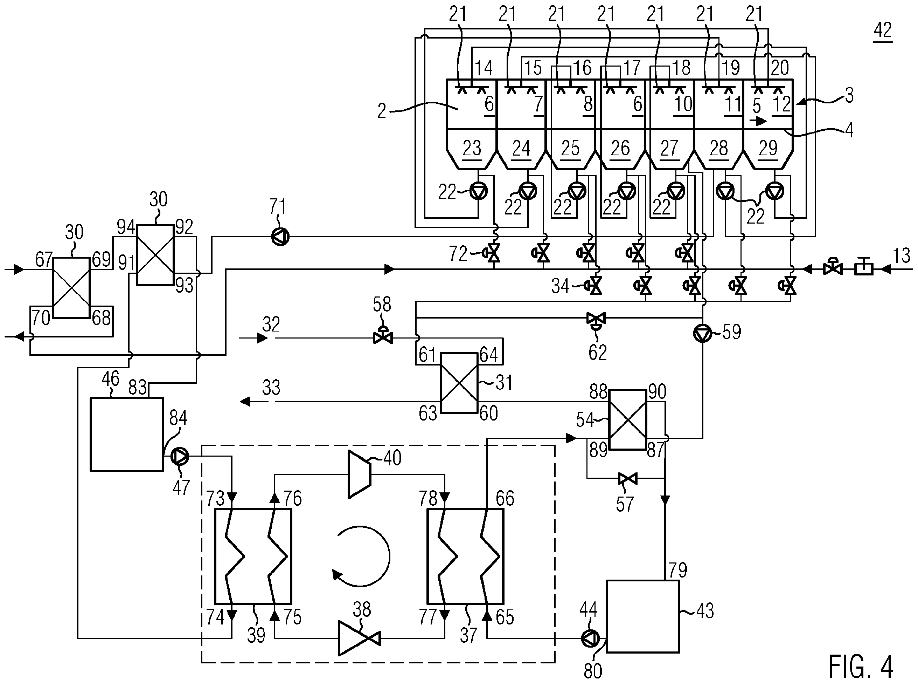

Die Figur 4 zeigt eine vierte Ausführungsform einer Anlage 56 zum Pasteurisieren von in verschlossenen Behältnissen 2 abgefüllten Lebensmitteln oder Getränken. Die bereits bezüglich der Figuren 1, 2 und 3 beschriebenen Elemente werden hier nicht noch einmal erläutert.

Im Vergleich zu der dritten Ausführungsform führt in der vierten Ausführungsform der erste Ausgang 66 des Kondensators 37 zu dem ersten Eingang 89 des dritten WT 54 und nicht - wie in der dritten Ausführungsform - zu dem zweiten Eingang 81 des Wärmetanks 43; daher kann die vierte Pumpe 45 zwischen dem zweiten Ausgang 82 des Wärmetanks 43 und dem ersten Eingang 89 des dritten WT 54 eingespart werden. Zwischen der Zuleitung zu dem ersten Eingang 89 des dritten WT 54 und der Zuleitung zu dem ersten Eingang 79 des Wärmetanks 43 ist ein mittels eines Ventils 57 steuerbarer weiterer Bypass vorgesehen.

Zudem führt der erste Ausgang 74 des Verdampfers 39 zu dem ersten Eingang 91 des vierten WT 55 und nicht - wie in der dritten Ausführungsform - zu dem zweiten Eingang 85 des Kältetanks 46; daher kann die sechste Pumpe 48 zwischen dem zweiten Ausgang 86 des Kältetanks 46 und dem ersten Eingang 91 des vierten WT 55 eingespart werden.

## Patentansprüche

1. Anlage (1, 42, 53, 56) zum Pasteurisieren von in verschlossenen Behältnissen (2) abgefüllten Lebensmitteln oder Getränken mit einer Prozessflüssigkeit (13),
wobei die Anlage (1, 42, 53, 56) umfasst:
mindestens eine Anwärmzone (6, 7), mindestens eine Pasteurisierungszone (8, 9, 10) und mindestens eine Abkühlzone (11, 12), die aufeinanderfolgend in einer Förderrichtung (5) der Behältnisse (2) angeordnet sind, wobei jeder der Zonen (6, 7, 8, 9, 10, 11, 12) jeweils eine Berieselungsvorrichtung (14, 15 16, 17, 18, 19, 20) zum Ausbringen der Prozessflüssigkeit (13) und jeweils ein Sammelbereich (23, 24, 25, 26, 27, 28, 29) zum Aufnehmen der ausgebrachten Prozessflüssigkeit zugeordnet ist,
Fördermittel (4) zum Fördern der Behältnisse (2) in der Förderrichtung (5) durch die mindestens eine Anwärmzone (6, 7), die mindestens eine Pasteurisierungszone (8, 9, 10) und die mindestens eine Abkühlzone (11, 12),
einen ersten Wärmetauscher (31), der Wärme von einer Wärmequelle (32), wie von einer Dampf- oder Heißwasserquelle, der Prozessflüssigkeit (13) aus einem Sammelbereich (27) der mindestens einen Pasteurisierungszone (10) zuführt und dazu mit dem einen Sammelbereich (27) der mindestens einen Pasteurisierungszone (10) und mit Zuläufen zu den Berieselungsvorrichtungen (14, 15) der mindestens einen Anwärmzone (6, 7) über ein druckgeschlossenes Anwärmleitungssystem (95) leitungsverbunden ist,
einen zweiten Wärmetauscher (30), der mit einer Kühlanlage, wie einem Kühlturm, gekoppelt ist, um die Prozessflüssigkeit (13) aus dem Sammelbereich (28) der mindestens einen Abkühlzone (11) zu kühlen und dazu mit dem einen Sammelbereich (28) der mindestens einen Abkühlzone (11) und Zuläufen zu den Berieselungsvorrichtungen (19, 20) der mindestens einen Abkühlzone (11, 12) über ein druckgeschlossenes Abkühlleitungssystem (96) leitungsverbunden ist,
eine Wärmepumpe (35) umfassend einen Kondensator (37) und einen Verdampfer (39),
wobei der Kondensator (37) ausgebildet ist, der Prozessflüssigkeit (13) in dem Anwärmleitungssystem (95) mittels des Kondensators (37) zusätzlich Wärme zuzuführen und wobei der Verdampfer (39) ausgebildet ist, die Prozessflüssigkeit (13) in dem Abkühlleitungssystem (96) mittels des Verdampfers (39) zusätzlich zu kühlen.

2. Die Anlage (1, 42, 53, 56) nach Anspruch 1,
wobei der erste Wärmetauscher (31) zum Zuführen von Wärme an die Prozessflüssigkeit (13) aus dem Sammelbereich (27) der mindestens einen Pasteurisierungszone (10) weiter mit Zuläufen zu den Berieselungsvorrichtung (16, 17, 18) der mindestens einen Pasteurisierungszone (8, 9, 10) über das geschlossene Anwärmleitungssystem (95) leitungsverbunden ist, wobei optional der erste Wärmetauscher (31) zum Zuführen von Wärme an die Prozessflüssigkeit (13) aus dem Sammelbereich (27) der mindestens einen Pasteurisierungszone (10) zudem weiter mit Zuläufen zu den Berieselungsvorrichtung (14, 15) der mindestens einen Anwärmzone (6, 7) über das Anwärmleitungssystem (95) leitungsverbunden ist
und
wobei der zweite Wärmetauscher (30) zum Kühlen der Prozessflüssigkeit (13) aus dem Sammelbereich (28) der mindestens einen Abkühlzone (11) weiter mit Zuläufen zu den Berieselungsvorrichtungen (19, 20) der mindestens einen Abkühlzone (8, 9, 10) über das Abkühlleitungssystem (96) leitungsverbunden ist, wobei optional der zweite Wärmetauscher (30) zum Kühlen der Prozessflüssigkeit (13) aus dem Sammelbereich (28) der mindestens einen Abkühlzone (11) zudem weiter mit Zuläufen zu den Berieselungsvorrichtungen (16, 17, 18) der mindestens einen Pasteurisierungszone (8, 9, 10) über das Abkühlleitungssystem (96) leitungsverbunden ist.

3. Die Anlage (1, 42, 53, 56) nach Anspruch 1 oder 2,
wobei in dem Anwärmleitungssystem (95) gegenüber einem Umgebungsdruck ein erster Überdruck in einem Bereich von 0,5·10⁵ Pa bis 2,5·10⁵ Pa vorgesehen ist
und/oder
wobei in dem Abkühlleitungssystem (96) gegenüber dem Umgebungsdruck ein zweiter Überdruck in einem Bereich von 0,5·10⁵ Pa bis 2,5·10⁵ Pa vorgesehen ist,
wobei der erste und der zweite Überdruck gleich oder verschieden groß sein können.

4. Die Anlage (1, 42, 53, 56) nach einem der Ansprüche 1 bis 3, wobei von dem Sammelbereich (28) der mindestens einen Abkühlzone (11) die Prozessflüssigkeit (13) mittels einer erste Pumpe (71) über das Abkühlleitungssystem (96) einem ersten Eingang (69) des zweiten Wärmetauschers (30) zuführbar ist.

5. Die Anlage (1, 42, 53, 56) nach einem der Ansprüche 1 bis 4, wobei eine Menge von zugeführter Wärme der Wärmequelle (32) mittels einer Dosiervorrichtung (58) steuerbar ist.

6. Die Anlage (1, 42, 53, 56) nach einem der Ansprüche 1 bis 5, wobei die Prozessflüssigkeit (13) aus dem Sammelbereich (27) der mindestens einen Pasteurisierungszone (10) einem zweiten Eingang (60) des ersten Wärmetauschers (31) mittels einer zweiten Pumpe (59) über das Anwärmleitungssystem (95) zuführbar ist.

7. Die Anlage (1, 42) nach einem der Ansprüche 1 bis 6, wobei in dem Anwärmleitungssystem (95) ein erster Bypass zu dem Kondensator (37) und in dem Abkühlleitungssystem (96) ein zweiter Bypass zu dem Verdampfer (39) vorgesehen sind, wobei optional der erste Bypass vor dem ersten Wärmetauscher (31) vorgesehen ist, wobei optional der zweite Bypass vor dem zweiten Wärmetauscher (30) vorgesehen ist.

8. Die Anlage (1, 42) nach Anspruch 7, wobei der erste Bypass vom Anwärmleitungssystem (95) durch eine erste Dosiervorrichtung (36_2) zu einem ersten Eingang (65) des Kondensators (37), durch den Kondensator (37) hindurch und von einem ersten Ausgang (66) des Kondensators (37) zurück zu dem Anwärmleitungssystem (95) führt, und wobei der zweite Bypass vom Abkühlleitungssystem (96) durch eine zweite Dosiervorrichtung (41_2) zu einem ersten Eingang (73) des Verdampfers (39), durch den Verdampfer (39) hindurch und von einem ersten Ausgang (74) des Verdampfers (39) zurück zu dem Abkühlleitungssystem (96) führt.

9. Die Anlage (42) nach Anspruch 7 oder 8, wobei in dem ersten Bypass weiter ein Wärmetank (43) und in dem zweiten Bypass weiter ein Kältetank (46) vorgesehen sind.

10. Die Anlage (42) nach Anspruch 9, wobei nach der ersten Dosiervorrichtung (36_2) ein erster Eingang (79) zu dem Wärmetank (43) vorgesehen ist und ein erster Ausgang (80) des Wärmetanks (43) durch eine dritte Pumpe (44) zu dem ersten Eingang (65) des Kondensators (37) führt, wobei der erste Ausgang (66) des Kondensators (37) zu einem zweiten Eingang (81) des Wärmetanks (43) führt und ein zweiter Ausgang (82) des Wärmetanks (43) durch eine vierte Pumpe (45) und eine dritte Dosiervorrichtung (49) zurück zu dem Anwärmleitungssystem (95) führt, wobei nach der zweiten Dosiervorrichtung (41_2) ein erster Eingang (83) zu dem Kältetank (46) vorgesehen ist und ein erster Ausgang (84) des Kältetanks (46) durch eine Pumpe (47) zu dem ersten Eingang (73) des Verdampfers (39) führt, wobei der erste Ausgang (74) des Verdampfers (39) zu einem zweiten Eingang (85) des Kältetanks (46) führt und ein zweiter Ausgang (86) des Kältetanks (46) durch eine sechste Pumpe (48) und eine vierte Dosiervorrichtung (52) zurück zu dem Abkühlleitungssystem (96) führt.

11. Die Anlage (42) nach Anspruch 10, wobei zwischen der ersten Dosiervorrichtung (36_2) und dem ersten Eingang (79) des Wärmetanks (43) ein erstes Federventil (50) vorgesehen ist und wobei zwischen der vierten Pumpe (45) und der dritten Dosiervorrichtung (49) ein zweites Federventil (50) vorgesehen ist.

12. Die Anlage (42) nach Anspruch 10 oder 11, wobei zwischen der zweiten Dosiervorrichtung (41_2) und dem ersten Eingang (83) des Kältetanks (46) ein drittes Federventil (51) vorgesehen ist und wobei zwischen der sechsten Pumpe (48) und der vierten Dosiervorrichtung (52) ein viertes Federventil (51) vorgesehen ist.

13. Die Anlage (53, 56) nach einem der Ansprüche 1 bis 6, weiter umfassend:
einen dritten Wärmetauscher (54), durch den das Anwärmleitungssystem (95) zumindest teilweise verläuft, wobei der dritte Wärmetauscher (54) der Prozessflüssigkeit (13) in dem Anwärmleitungssystem (95) Wärme von einem Wärmetank (43) der Anlage (53, 56) zuführt und dazu mit dem Wärmetank (43) und dem Kondensator (37) leitungsverbunden ist,
und
einen vierten Wärmetauscher (55), durch den das Abkühlleitungssystem (96) zumindest teilweise verläuft, wobei der vierte Wärmetauscher (55) mit einem Kältetank (46) der Anlage (53, 56) und dem Verdampfer (39) leitungsverbunden ist und die Prozessflüssigkeit (13) in dem Abkühlleitungssystem (96) kühlt.

14. Die Anlage (53, 56) nach Anspruch 13, wobei der dritte Wärmetauscher (54) vor dem ersten Wärmetauscher (31) und der vierte Wärmetauscher (55) vor dem zweiten Wärmetauscher (30) vorgesehen ist.

15. Die Anlage (53) nach Anspruch 13 oder 14,
wobei eine Leitung nach einem ersten Ausgang (90) des dritten Wärmetauschers (54) zu einem ersten Eingang (79) des Wärmetanks (43), von einem ersten Ausgang (80) des Wärmetanks (43) durch eine dritte Pumpe (44) zu einem ersten Eingang (65) des Kondensators (37), von einem ersten Ausgang (66) des Kondensators zu einem zweiten Eingang (81) des Wärmetanks (43), von einem zweiten Ausgang (82) des Wärmetanks (43) durch eine vierte Pumpe (45) zu einem ersten Eingang (89) des dritten Wärmetauschers (54) führt,
wobei eine weitere Leitung nach einem ersten Ausgang (92) des vierten Wärmetauschers (55) zu einem ersten Eingang (83) des Kältetanks (46), von einem ersten Ausgang (84) des Kältetanks (46) durch eine fünfte Pumpe (47) zu einem ersten Eingang (73) des Verdampfers (39), von einem ersten Ausgang (74) des Verdampfers (39) zu einem zweiten Eingang (85) des Kältetanks (46), von einem zweiten Ausgang (86) des Kältetanks (46) durch eine sechste Pumpe (48) zu einem ersten Eingang (91) des vierten Wärmetauschers (55) führt.

16. Die Anlage (56) nach Anspruch 13 oder 14,
wobei eine Leitung nach einem ersten Ausgang (90) des dritten Wärmetauschers (54) zu einem ersten Eingang (79) des Wärmetanks (43), von einem ersten Ausgang (80) des Wärmetanks (43) durch eine dritte Pumpe (44) zu einem ersten Eingang (65) des Kondensators (37), von einem ersten Ausgang (66) des Kondensators zu einem ersten Eingang (89) des dritten Wärmetauschers (54) führt, wobei zudem eine Bypassleitung um den dritten Wärmetauscher (54) vorgesehen ist, die von vor dem ersten Eingang (89) des dritten Wärmetauschers (54) hinter den ersten Ausgang (90) des dritten Wärmetauschers (54) führt,
wobei eine weitere Leitung nach einem ersten Ausgang (92) des vierten Wärmetauschers (55) zu einem ersten Eingang (83) des Kältetanks (46), von einem ersten Ausgang (84) des Kältetanks (46) durch eine fünfte Pumpe (47) zu einem ersten Eingang (73) des Verdampfers (39), von einem ersten Ausgang (74) des Verdampfers (39) zu einem ersten Eingang (91) des vierten Wärmetauschers (55) führt.

## Claims

1. Plant (1, 42, 53, 56) for pasteurising foodstuffs or beverages filled into closed containers (2) by way of a process liquid (13),
wherein the plant (1, 42, 53, 56) comprises:
at least one heating zone (6, 7), at least one pasteurising zone (8, 9, 10) and at least one cooling zone (11, 12), which are arranged successively in a conveying direction (5) of the containers (2), each of the zones (6, 7, 8, 9, 10, 11, 12) being assigned a sprinkling device (14, 15, 16, 17, 18, 19, 20) for discharging the process liquid (13) and a collecting region (23, 24, 25, 26, 27, 28, 29) for receiving the discharged process liquid,
conveying means (4) for conveying the containers (2) in the conveying direction (5) through the at least one heating zone (6, 7), the at least one pasteurising zone (8, 9, 10) and the at least one cooling zone (11, 12),
a first heat exchanger (31) which feeds heat from a heat source (32), such as from a steam or hot water source, to the process liquid (13) from a collecting region (27) of the at least one pasteurising zone (10) and for this purpose has a line connection to the one collecting region (27) of the at least one pasteurising zone (10) and to feeds to the sprinkling devices (14, 15) of the at least one heating zone (6, 7) via a pressure-closed heating line system (95),
a second heat exchanger (30) coupled to a cooling plant, such as a cooling tower, for cooling the process liquid (13) from the collecting region (28) of the at least one cooling zone (11) and, for this purpose, has a line connection to the one collecting region (28) of the at least one cooling zone (11) and feeds to the sprinkling devices (19, 20) of the at least one cooling zone (11, 12) via a pressure-closed cooling line system (96),
a heat pump (35) comprising a condenser (37) and an evaporator (39),
wherein the condenser (37) is designed to supply additional heat to the process liquid (13) in the heating line system (95) by means of the condenser (37) and wherein the evaporator (39) is designed to additionally cool the process liquid (13) in the cooling line system (96) by means of the evaporator (39).

2. The plant (1, 42, 53, 56) according to claim 1,
wherein the first heat exchanger (31) for supplying heat to the process liquid (13) from the collecting region (27) of the at least one pasteurising zone (10) is further connected by a pipeline to feeds to the sprinkling devices (16, 17, 18) of the at least one pasteurising zone (8, 9, 10) via the closed heating line system (95), wherein optionally the first heat exchanger (31) for supplying heat to the process liquid (13) from the collecting region (27) of the at least one pasteurising zone (10) is further connected by a pipeline to feeds to the sprinkling device (14, 15) of the at least one heating zone (6, 7) via the heating line system (95)
and
wherein the second heat exchanger (30) for cooling the process liquid (13) from the collecting area (28) of the at least one cooling zone (11) is further connected by a pipeline to feeds to the sprinkling devices (19, 20) of the at least one cooling zone (8, 9, 10) via the cooling line system (96), wherein optionally the second heat exchanger (30) for cooling the process liquid (13) from the collecting region (28) of the at least one cooling zone (11) is also further connected by a pipeline with feeds to the sprinkling devices (16, 17, 18) of the at least one pasteurising zone (8, 9, 10) via the cooling line system (96).

3. The plant (1, 42, 53, 56) according to claim 1 or 2,
wherein a first overpressure in a range of 0.5·10⁵ Pa to 2.5·10⁵ Pa is provided in the heating line system (95) relative to an ambient pressure
and/or
wherein a second overpressure in a range of 0.5·10⁵ Pa to 2.5·10⁵ Pa is provided in the cooling line system (96) relative to the ambient pressure,
wherein the first and second overpressures can be the same or different.

4. The plant (1, 42, 53, 56) according to one of claims 1 to 3, wherein from the collecting region (28) of the at least one cooling zone (11) the process liquid (13) can be supplied by means of a first pump (71) via the cooling line system (96) to a first inlet (69) of the second heat exchanger (30).

5. The plant (1, 42, 53, 56) according to one of claims 1 to 4, wherein an amount of supplied heat of the heat source (32) is controllable by means of a metering device (58).

6. The plant (1, 42, 53, 56) according to one of claims 1 to 5, wherein the process liquid (13) from the collecting region (27) of the at least one pasteurising zone (10) can be supplied to a second inlet (60) of the first heat exchanger (31) by means of a second pump (59) via the heating line system (95).

7. The plant (1, 42) according to one of claims 1 to 6, wherein in the heating line system (95) a first bypass to the condenser (37) and in the cooling line system (96) a second bypass to the evaporator (39) are provided, wherein optionally the first bypass is provided upstream of the first heat exchanger (31), wherein optionally the second bypass is provided upstream of the second heat exchanger (30).

8. The plant (1, 42) according to claim 7, wherein the first bypass leads from the heating line system (95) through a first metering device (36_2) to a first inlet (65) of the condenser (37), through the condenser (37) and from a first outlet (66) of the condenser (37) back to the heating line system (95), and wherein the second bypass leads from the cooling line system (96) through a second metering device (41_2) to a first inlet (73) of the evaporator (39), through the evaporator (39) and from a first outlet (74) of the evaporator (39) back to the cooling line system (96).

9. The plant (42) according to claim 7 or 8, wherein a heat tank (43) is further provided in the first bypass and a cooling tank (46) is further provided in the second bypass.

10. The plant (42) according to claim 9, wherein a first inlet (79) to the heat tank (43) is provided downstream of the first metering device (36_2) and a first outlet (80) of the heat tank (43) leads to the first inlet (65) of the condenser (37) through a third pump (44), wherein the first outlet (66) of the condenser (37) leads to a second inlet (81) of the heat tank (43) and a second outlet (82) of the heat tank (43) leads through a fourth pump (45) and a third metering device (49) back to the heating line system (95),
wherein downstream of the second metering device (41_2) a first inlet (83) is provided to the cooling tank (46) and a first outlet (84) of the cooling tank (46) leads through a pump (47) to the first inlet (73) of the evaporator (39), wherein the first outlet (74) of the evaporator (39) leads to a second inlet (85) of the cooling tank (46) and a second outlet (86) of the cooling tank (46) leads through a sixth pump (48) and a fourth metering device (52) back to the cooling line system (96).

11. The plant (42) according to claim 10, wherein a first spring valve (50) is provided between the first metering device (36_2) and the first inlet (79) of the heat tank (43), and wherein a second spring valve (50) is provided between the fourth pump (45) and the third metering device (49).

12. The plant (42) according to claim 10 or 11, wherein a third spring valve (51) is provided between the second metering device (41_2) and the first inlet (83) of the cooling tank (46), and wherein a fourth spring valve (51) is provided between the sixth pump (48) and the fourth metering device (52).

13. The plant (53, 56) of one of claims 1 to 6, further comprising:
a third heat exchanger (54) through which the heating line system (95) at least partially passes, the third heat exchanger (54) supplying heat to the process liquid (13) in the heating line system (95) from a heat tank (43) of the plant (53, 56) and being connected by a pipeline to the heat tank (43) and the condenser (37) for this purpose,
and
a fourth heat exchanger (55) through which the cooling line system (96) at least partially passes, the fourth heat exchanger (55) being connected by a pipeline to a cooling tank (46) of the plant (53, 56) and to the evaporator (39) and cooling the process liquid (13) in the cooling line system (96).

14. The plant (53, 56) according to claim 13, wherein the third heat exchanger (54) is provided upstream of the first heat exchanger (31) and the fourth heat exchanger (55) is provided upstream of the second heat exchanger (30).

15. The plant (53) according to claim 13 or 14,
wherein a pipe leads from a first outlet (90) of the third heat exchanger (54) to a first inlet (79) of the heat tank (43), from a first outlet (80) of the heat tank (43) through a third pump (44) to a first inlet (65) of the condenser (37), from a first outlet (66) of the condenser to a second inlet (81) of the heat tank (43), from a second outlet (82) of the heat tank (43) through a fourth pump (45) to a first inlet (89) of the third heat exchanger (54),
wherein a further pipe leads downstream of a first outlet (92) of the fourth heat exchanger (55) to a first inlet (83) of the cooling tank (46), from a first outlet (84) of the cooling tank (46) through a fifth pump (47) to a first inlet (73) of the evaporator (39), from a first outlet (74) of the evaporator (39) to a second inlet (85) of the cooling tank (46), from a second outlet (86) of the cooling tank (46) through a sixth pump (48) to a first inlet (91) of the fourth heat exchanger (55).

16. The plant (56) according to claim 13 or 14,
wherein a pipe leads from a first outlet (90) of the third heat exchanger (54) to a first inlet (79) of the heat tank (43), from a first outlet (80) of the heat tank (43) through a third pump (44) to a first inlet (65) of the condenser (37), from a first outlet (66) of the condenser to a first inlet (89) of the third heat exchanger (54), wherein in addition a bypass is provided around the third heat exchanger (54), which leads from upstream of the first inlet (89) of the third heat exchanger (54) downstream of the first outlet (90) of the third heat exchanger (54),
wherein a further pipe leads after a first outlet (92) of the fourth heat exchanger (55) to a first inlet (83) of the cooling tank (46), from a first outlet (84) of the cooling tank (46) through a fifth pump (47) to a first inlet (73) of the evaporator (39), from a first outlet (74) of the evaporator (39) to a first inlet (91) of the fourth heat exchanger (55).

## Revendications

1. Installation (1, 42, 53, 56) pour pasteuriser avec un liquide de traitement (13) des aliments ou des boissons remplis dans des récipients scellés (2),
dans laquelle l'installation (1, 42, 53, 56) comprend :
au moins une zone de chauffage (6, 7), au moins une zone de pasteurisation (8, 9, 10) et au moins une zone de refroidissement (11, 12), qui sont agencées successivement dans une direction de transport (5) des récipients (2), dans laquelle lesdites zones (6, 7, 8, 9, 10, 11, 12) sont associées chacune à un dispositif d'arrosage (14, 15, 16, 17, 18, 19, 20) pour distribuer le liquide de traitement (13) et sont associées chacune à une région de collecte (23, 24, 25, 26, 27, 28, 29) destinée à recevoir le liquide de traitement distribué,
des moyens de transport (4) pour transporter les récipients (2) dans la direction de transport (5) à travers ladite au moins une zone de chauffage (6, 7), ladite au moins une zone de pasteurisation (8, 9, 10) et ladite au moins une zone de refroidissement (11, 12),
un premier échangeur de chaleur (31), qui fournit de la chaleur provenant d'une source de chaleur (32), telle qu'une source de vapeur ou d'eau chaude, au liquide de traitement (13) provenant d'une région de collecte (27) de ladite au moins une zone de pasteurisation (10) et qui est à cet effet connecté par une tuyauterie à ladite région de collecte (27) de ladite au moins une zone de pasteurisation (10) et à des entrées des dispositifs d'arrosage (14, 15) de ladite au moins une zone de chauffage (6, 7) via un système de tuyauterie de chauffage fermé sous pression (95),
un deuxième échangeur de chaleur (30) qui est couplé à une installation de refroidissement, telle qu'une tour de refroidissement, pour refroidir le liquide de traitement (13) provenant de la région de collecte (28) de ladite au moins une zone de refroidissement (11) et est à cet effet connecté par une tuyauterie à ladite une région de collecte (28) de ladite au moins une zone de refroidissement (11) et à des entrées des dispositifs d'arrosage (19, 20) de ladite au moins une zone de refroidissement (11, 12) via un système de tuyauterie de refroidissement fermé sous pression (96),
une pompe à chaleur (35) comprenant un condenseur (37) et un évaporateur (39),
dans laquelle le condenseur (37) est conçu pour fournir de la chaleur additionnelle au liquide de traitement (13) dans le système de tuyauterie de chauffage (95) au moyen du condenseur (37) et dans laquelle l'évaporateur (39) est conçu pour refroidir additionnellement le liquide de traitement (13) dans le système de tuyauterie de refroidissement (96) au moyen de l'évaporateur (39).

2. Installation (1, 42, 53, 56) selon la revendication 1,
dans laquelle le premier échangeur de chaleur (31) est en outre connecté par une tuyauterie via le système de tuyauterie de chauffage fermé (95) à des entrées du dispositif d'arrosage (16, 17, 18) de ladite au moins une zone de pasteurisation (8, 9, 10) pour fournir de la chaleur au liquide de traitement (13) provenant de la région de collecte (27) de ladite au moins une zone de pasteurisation (10), dans laquelle optionnellement le premier échangeur de chaleur (31) est en outre connecté par une tuyauterie via le système de tuyauterie de chauffage (95) à des entrées du dispositif d'arrosage (14, 15) de ladite au moins une zone de chauffage (6, 7) pour fournir de la chaleur au liquide de traitement (13) provenant de la région de collecte (27) de ladite au moins une zone de pasteurisation (10), et
dans laquelle le deuxième échangeur de chaleur (30) est en outre connecté par une tuyauterie via le système de tuyauterie de refroidissement (96) à des entrées des dispositifs d'arrosage (19, 20) de ladite au moins une zone de refroidissement (8, 9, 10) pour refroidir le liquide de traitement (13) provenant de la région de collecte (28) de ladite au moins une zone de refroidissement (11), dans laquelle optionnellement le deuxième échangeur de chaleur (30) est en outre connecté par une tuyauterie via le système de tuyauterie de refroidissement (96) à des entrées des dispositifs d'arrosage (16, 17, 18) de ladite au moins une zone de pasteurisation (8, 9, 10) pour refroidir le liquide de traitement (13) provenant de la région de collecte (28) de ladite au moins une zone de refroidissement (11).

3. Installation (1, 42, 53, 56) selon la revendication 1 ou 2,
dans laquelle une première surpression dans une plage de 0,5 × 10⁵ Pa à 2,5 × 10⁵ Pa par rapport à une pression ambiante est pourvue dans le système de tuyauterie de chauffage (95), et/ou
dans laquelle une deuxième surpression dans une plage de 0,5 × 10⁵ Pa à 2,5 × 10⁵ Pa par rapport à la pression ambiante est pourvue dans le système de tuyauterie de refroidissement (96),
dans laquelle les première et deuxième surpressions peuvent être identiques ou différentes.

4. Installation (1, 42, 53, 56) selon l'une des revendications 1 à 3, dans laquelle le liquide de traitement (13) peut être alimenté depuis la région de collecte (28) de ladite au moins une zone de refroidissement (11) jusqu'à une première entrée (69) du deuxième échangeur de chaleur (30) à l'aide d'une première pompe (71) via le système de tuyauterie de refroidissement (96) .

5. Installation (1, 42, 53, 56) selon l'une des revendications 1 à 4, dans laquelle la quantité de chaleur fournie par la source de chaleur (32) peut être contrôlée au moyen d'un dispositif de dosage (58).

6. Installation (1, 42, 53, 56) selon l'une des revendications 1 à 5, dans laquelle le liquide de traitement (13) peut être alimenté depuis la région de collecte (27) de ladite au moins une zone de pasteurisation (10) jusqu'à une deuxième entrée (60) du premier échangeur de chaleur (31) à l'aide d'une deuxième pompe (59) via le système de tuyauterie de chauffage (95).

7. Installation (1, 42) selon l'une des revendications 1 à 6, dans laquelle une première dérivation vers le condenseur (37) est pourvue dans le système de tuyauterie de chauffage (95) et une deuxième dérivation vers l'évaporateur (39) est pourvue dans le système de tuyauterie de refroidissement (96), dans laquelle optionnellement la première dérivation est pourvue avant le premier échangeur de chaleur (31), dans laquelle optionnellement la deuxième dérivation est pourvue avant le deuxième échangeur de chaleur (30).

8. Installation (1, 42) selon la revendication 7, dans laquelle la première dérivation part du système de tuyauterie de chauffage (95), passe par un premier dispositif de dosage (36_2) jusqu'à une première entrée (65) du condenseur (37), traverse le condenseur (37) et retourne depuis une première sortie (66) du condenseur (37) au système de tuyauterie de chauffage (95), et dans laquelle la deuxième dérivation part du système de tuyauterie de refroidissement (96), passe par un deuxième dispositif de dosage (41_2) jusqu'à une première entrée (73) de l'évaporateur (39), traverse l'évaporateur (39) et retourne depuis une première sortie (74) de l'évaporateur (39) au système de tuyauterie de refroidissement (96).

9. Installation (42) selon la revendication 7 ou 8, dans laquelle en outre un réservoir de chaleur (43) est pourvu dans la première dérivation et un réservoir de froid (46) est pourvu dans la deuxième dérivation.

10. Installation (42) selon la revendication 9,
dans laquelle une première entrée (79) du réservoir de chaleur (43) est pourvue après le premier dispositif de dosage (36_2) et une première sortie (80) du réservoir de chaleur (43) mène à travers une troisième pompe (44) à la première entrée (65) du condenseur (37),
dans laquelle la première sortie (66) du condenseur (37) mène à une deuxième entrée (81) du réservoir de chaleur (43) et une deuxième sortie (82) du réservoir de chaleur (43) renvoie au système de tuyauterie de chauffage (95) à travers une quatrième pompe (45) et un troisième dispositif de dosage (49),
dans laquelle une première entrée (83) du réservoir de froid (46) est pourvue après le deuxième dispositif de dosage (41_2) et une première sortie (84) du réservoir de froid (46) mène à la première entrée (73) de l'évaporateur (39) à travers une pompe (47),
dans laquelle la première sortie (74) de l'évaporateur (39) mène à une deuxième entrée (85) du réservoir de froid (46) et une deuxième sortie (86) du réservoir de froid (46) renvoie au système de tuyauterie de refroidissement (96) à travers une sixième pompe (48) et un quatrième dispositif de dosage (52).

11. Installation (42) selon la revendication 10, dans laquelle une première soupape à ressort (50) est pourvue entre le premier dispositif de dosage (36_2) et la première entrée (79) du réservoir de chaleur (43) et dans laquelle une deuxième soupape à ressort (50) est pourvue entre la quatrième pompe (45) et le troisième dispositif de dosage (49) .

12. Installation (42) selon la revendication 10 ou 11, dans laquelle une troisième soupape à ressort (51) est pourvue entre le deuxième dispositif de dosage (41_2) et la première entrée (83) du réservoir de froid (46) et dans laquelle une quatrième soupape à ressort (51) est pourvue entre la sixième pompe (48) et le quatrième dispositif de dosage (52).

13. Installation (53, 56) selon l'une des revendications 1 à 6, comprenant en outre :
un troisième échangeur de chaleur (54) traversé au moins partiellement par le système de tuyauterie de chauffage (95), dans laquelle le troisième échangeur de chaleur (54) du liquide de traitement (13) dans le système de tuyauterie de chauffage (95) alimente de la chaleur provenant d'un réservoir de chaleur (43) de l'installation (53, 56) et est à cet effet connecté par une tuyauterie au réservoir de chaleur (43) et au condenseur (37), et
un quatrième échangeur de chaleur (55) traversé au moins partiellement par le système de tuyauterie de refroidissement (96), dans laquelle le quatrième échangeur de chaleur (55) est connecté par une tuyauterie à un réservoir de froid (46) de l'installation (53, 56) et à l'évaporateur (39) et refroidit le liquide de traitement (13) dans le système de tuyauterie de refroidissement (96).

14. Installation (53, 56) selon la revendication 13, dans laquelle le troisième échangeur de chaleur (54) est pourvu avant le premier échangeur de chaleur (31) et le quatrième échangeur de chaleur (55) est pourvu avant le deuxième échangeur de chaleur (30).

15. Installation (53) selon la revendication 13 ou 14,
dans laquelle une conduite mène depuis après une première sortie (90) du troisième échangeur de chaleur (54) jusqu'à une première entrée (79) du réservoir de chaleur (43), depuis une première sortie (80) du réservoir de chaleur (43) à travers une troisième pompe (44) jusqu'à une première entrée (65) du condenseur (37), depuis une première sortie (66) du condenseur jusqu'à une deuxième entrée (81) du réservoir de chaleur (43), et depuis une deuxième sortie (82) du réservoir de chaleur (43) à travers une quatrième pompe (45) jusqu'à une première entrée (89) du troisième échangeur de chaleur (54),
dans laquelle une conduite additionnelle mène depuis après une première sortie (92) du quatrième échangeur de chaleur (55) jusqu'à une première entrée (83) du réservoir de froid (46), depuis une première sortie (84) du réservoir de froid (46) à travers une cinquième pompe (47) jusqu'à une première entrée (73) de l'évaporateur (39), depuis une première sortie (74) de l'évaporateur (39) jusqu'à une deuxième entrée (85) du réservoir de froid (46), depuis une deuxième sortie (86) du réservoir de froid (46) à travers une sixième pompe (48) jusqu'à une première entrée (91) du quatrième échangeur thermique (55).

16. Installation (56) selon la revendication 13 ou 14,
dans laquelle une conduite mène depuis après une première sortie (90) du troisième échangeur de chaleur (54) jusqu'à une première entrée (79) du réservoir de chaleur (43), depuis une première sortie (80) du réservoir de chaleur (43) à travers une troisième pompe (44) jusqu'à une première entrée (65) du condenseur (37), depuis une première sortie (66) du condenseur jusqu'à une première entrée (89) du troisième échangeur thermique (54), dans laquelle une conduite de dérivation est également pourvue autour du troisième échangeur de chaleur (54), qui mène depuis devant la première entrée (89) du troisième échangeur de chaleur (54) jusqu'à derrière la première sortie (90) du troisième échangeur de chaleur (54),
dans laquelle une conduite additionnelle mène depuis après une première sortie (92) du quatrième échangeur de chaleur (55) jusqu'à une première entrée (83) du réservoir de froid (46), depuis une première sortie (84) du réservoir de froid (46) à travers une cinquième pompe (47) jusqu'à une première entrée (73) de l'évaporateur (39), depuis une première sortie (74) de l'évaporateur (39) jusqu'à une première entrée (91) du quatrième échangeur de chaleur (55) .
